(19)

**Europäisches Patentamt**

**European Patent Office**

**Office européen des brevets**

(11) **EP 4 369 127 A1**

(12) **EUROPEAN PATENT APPLICATION**

(43) Date of publication:
**15.05.2024 Bulletin 2024/20**

(21) Application number: **22206446.1**

(22) Date of filing: **09.11.2022**

(51) International Patent Classification (IPC):
***G05B 23/02*** *(2006.01)*

(52) Cooperative Patent Classification (CPC):
**G05B 23/0243; G05B 23/0283**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Burckhardt Compression AG**
**8404 Winterthur (CH)**

(72) Inventors:
• **Lobodzinski, Bogdan**
 **22589 Hamburg (DE)**
• **Cuquel, Alexis**
 **8006 Zürich (CH)**

(74) Representative: **Hepp Wenger Ryffel AG**
**Friedtalweg 5**
**9500 Wil (CH)**

(54) **METHOD FOR PREDICTING FAILURES IN INDUSTRIAL SYSTEMS**

(57) A method for predicting failures in an industrial system (100), the method comprising the steps of a) providing an input time series (1) comprising a plurality of data points ($t_{1, .., n}$, $y_{1, ..., n}$), each data point containing a time stamp ($t_i$) and a value ($y_i$) of a variable $W$ measured at the respective time stamp ($t_i$); b) calculating fitting parameters (2) of a log-periodic power law model function $W(t)$ (3) that give the smallest mean squared error *mse* (4) to the input time series (1) or to at least one subset (1a) of data points of said input time series (1), to obtain a fitted function (5); c) identifying the local maxima ($N_{max}$) and the local minima ($N_{min}$) of the fitted function (5); d) determining a trend ($T_{max}$) from at least some of the identified local maxima ($N_{max}$) and a trend ($T_{min}$) from at least some of the identified local minima ($N_{min}$), respectively; e) identifying whether or not a given data point ($t_n$, $y_n$) of the input time series (1) is a critical point ($t_c$), wherein said given data point ($t_n$, $y_n$) is a critical point ($t_c$) if both trends ($T_{max}$; $T_{min}$) have the same character for the last point ($t_{n-1}$, $y_{n-1}$) of the input time series preceding said given data point ($t_n$, $y_n$); and, if a critical point ($t_c$) has been identified in step e), a step f) outputting a signal (7) indicating that a failure of at least one component (8) in the industrial system (100) was predicted.

Fig. 1

**EP 4 369 127 A1**

**Description**

The present invention relates to a method for predicting failures in industrial systems, an industrial system, a computer program, and a computer-readable storage medium according to the independent claims. The present invention further relates to the use of a method as disclosed herein for predicting failures in an industrial system, in particular in a reciprocating compressor.

The concept of predictive maintenance, i.e. the detection and prediction of future failures based on multivariate or univariate time series of data collected from an industrial system, has far-reaching significance and application potential in a variety of industrial applications as it allows planning necessary maintenance work in advance. By avoiding potential failures or machine breakdowns, the uptime of machines can be increased and the costs of unscheduled downtimes as well as standard servicing operations reduced.

The development of supervised predictive maintenance methods based on machine learning (ML) and training of algorithms by machine operators is known. In practice, however, the reliability and accuracy of predictive maintenance methods obtained this way is often hampered by the misinterpretation and/or imprecise description of failures by operators. In most cases, it is not possible to accurately localize the cause of failure over time on the basis of the data available. This poses a serious problem for learning ML models based on supervised methods, as well as for detecting statistical shifts in the data. This necessitates frequent human intervention in the ML production pipeline.

It is an object of the present invention to overcome these and other drawbacks of the prior art and in particular to provide an improved method for predicting failures in industrial systems, such as reciprocating compressors, which is cost-effective, reliable and easy to perform. It is a further object of the present invention to provide an industrial system, in particular a reciprocating compressor system, in which failures can be predicted in a cost-effective and reliable manner.

The object is achieved by a method for predicting failures in industrial systems, an industrial system, a computer program, a computer-readable storage medium, and the use of a method as disclosed herein for predicting failures in an industrial system pursuant to the independent claims. Advantageous embodiments are subject to the dependent claims.

The method for predicting failures in an industrial system comprises the following steps a) - f):

In step a), an input time series comprising a plurality of data points $(t_{1,\ldots,n}, y_{1,\ldots,n})$ is provided. Each of said data points contains a time stamp $(t_i)$ and a value $(y_i)$ of a variable $W$ measured at the respective time stamp $(t_i)$, wherein the index 1 denotes the first value and the index n denotes a given value of said input time series. The index i denotes a value lying between said first value and said given value. In the context of the present specification, the term "given data point" refers to the data point under consideration, i.e. for which it is determined whether or not it corresponds to a phase transition (critical point). The given data point may in particular be the most recent or last point of the input time series.

In step b), the fitting parameters of a log-periodic power law model function $W(t)$ are calculated for the input time series. Alternatively, fitting may also be performed for different time lengths or number (L) of data points preceding the given data point of the input time series, respectively. In this alternative, the fitting parameters of a log-periodic power law model function $W(t)$ are calculated for at least one subset of data points of the input time series, wherein each subset consists of a number of data points preceding the given data point of said input time series. In each case, fitting is performed such that the smallest mean squared error *mse* is obtained with respect to the input time series or for the respective subsets of data points considered. This is to obtain a fitted log-periodic power law function.

In step c), the local extrema (N) of the best fitted function are identified. The local extrema (N) consist of the local maxima $(N_{max})$ and the local minima $(N_{min})$ of the best fitted function.

In step d), a trend $(T_{max})$ is determined from at least some of the identified local maxima $(N_{max})$. Furthermore, a trend $(T_{min})$ is determined from at least some of the identified local minima $(N_{min})$.

In step e), it is identified whether or not the given data point $(t_n, y_n)$ is a critical point $(t_c)$. The given data point $(t_n, y_n)$ is treated as a critical point $(t_c)$ if both of the trends $(T_{max}; T_{min})$ determined in step d) have the same character for the last point $(t_{n-1}, y_{n-1})$ of the input time series preceding said given data point $(t_n, y_n)$. The trends $(T_{max}; T_{min})$ will change to the opposite character, respectively, for the next points $(t_{n+k}, y_{n+k})$, where k > 0, with respect to the trends $(T_{max}; T_{min})$ of the input time series preceding the given data point $(t_n, y_n)$.

In the case that a critical point $(t_c)$ has been determined in step e), a signal indicating that a failure of at least one component in the industrial system was predicted is output in step f) of the method. Otherwise, in the event that no critical point $(t_c)$ was determined or identified in step e), the procedure described above, i.e. at least the method steps e) and f), is performed again at a later time evaluating a new given input data point.

As outlined in the introductory section of the present specification, in the case of supervised approaches for the development of predictive maintenance methods, poor quality training data often results in the obtained methods being unreliable or inadequate is some other way. By contrast, the method disclosed herein allows in particular for the unsupervised prediction of failures in industrial systems and is thus better suited for building predictive maintenance processes.

The inventors of the present invention have surprisingly found that the proposed algorithm, which is based on matching the log periodic power law (LPPL), can reliably and well in advance predict failures, such as valve and piston rod packing failures, in reciprocating compressor systems. A similar approach based also on the functional behavior of LPPL was proposed by JOHANSEN, A. and SORNETTE, D. (Evaluation of the quantitative prediction of a trend reversal on the Japanese stock market in 1999, International Journal of Modern Physics C 2000, 11, no. 2, pages 359-364) and SORNETTE, D. (Critical market crashes, Physics Reports 2003, 378, no. 1, pages 1-98) for bubble (or anti-bubble) detection in economic time series. In particular, the methods known from the state of the art remain silent about the applicability of log-periodic power law methods for determining critical points in univariate time series of a measured variable relating to the state of components in industrial systems, such as in particular reciprocating compressor systems. The applicability of the log-periodic power law method was not foreseeable in particular because - unlike in the case of data describing the financial market, where the studied variable directly characterizes the changes or defects in the analyzed system - the changes causing the failure (e.g. material degradation, cracks etc.) in an industrial system, such as a reciprocating compressor, cannot be measured directly but only indirectly, e.g., changes in the angle of opening of the inlet or outlet valves in a cylinder as a function of the pressure in the cylinder chamber, or vibration of the piston rod as a function of the angle of rotation of the crankshaft. In other words, degradational (unmonitored) changes affect changes in measured variables in a less visible (more distorted) way than in the case of direct variable measurements.

The analysis of the collected data with cases of failures of reciprocating compressors led to the conclusion that, until a rupture (onset of an irreversible (deterioration) process at a critical point) occurs, the behavior of the machine is normal and usually shows no signs of failure. However, changes are observable that show functional behavior indicating the occurrence of future problems after the occurrence of a rupture. It was surprisingly found that it is sufficient to determine whether or not a given (current) point in time is the moment of rupture. If the current point in time corresponds to a rupture, then based on knowledge of the time characteristics of the dynamics of the entire compressor system, the time period in which the failure will occur, i.e. when the changes in operating parameters are significant enough that there is a possibility of machine failure or breakdown, can be identified.

The log-periodic power law model applied in the method disclosed herein describes a process that is near the critical point of a phase transition of the $2^{nd}$ order. In the case of industrial systems, i.e. machines or processes, this is the point in time at which the failure of one (or more) of the components of the machine or process occurs.

In a preferred embodiment of the method disclosed herein, the log-periodic power law model function $W(t)$ is equation (1):

$$W(t) \approx A + |t_c - t|^m [B + C_1 cos(\omega \log|t_c - t| + \Phi)] \qquad (1)$$

In the above equation (1), the following parameters are used: W - vector of variables by which the industrial system is analyzed; $t_c$ = critical point treated as a detection of a future failure; $t = [t_{n-1-pmax}, t_{n-pmax}, ..., t_{n-2}, t_{n-1}]$ - is a transverse vector of time points from the past ($t \leq t_{n-1}$) with length of determined by the $p_{max}$ parameter for which the smallest value of the error *mse* of fitting the function $W(t)$ to the data used was reached; A, B, m, C1 , $\omega$, $\Phi$, $p_{max}$ = fitting parameters of the log-periodic power law model function;

The present inventors found that equation (1) can be used particularly well to find time points in a time series of input data that are indicative of a failure of some component in the industrial system, in particular in the reciprocating compressor system, under consideration. However, it is understood by the skilled person that the above equation (1) can also be expressed differently, rearranged or modified to an equivalent form.

It is particularly preferred, if the following constraints are imposed on the following of the fitting parameters in above equation (1): A > 0 and/or 0 < m < 1 and/or 2 < $\omega$ < 8. In an even more preferred embodiment of the method disclosed herein, the following constraints are imposed on the following of the fitting parameters in above equation (1): A > 0 and 0 < m < 1 and 2 < $\omega$ < 8.

Fitting parameter "A" is determined by the character of the input data, which are always positive values in the application presented herein. The preferred range of parameter "m" ensures that the fitting value for the critical time ($t_c$) is greater than zero (m > 0) and changes faster than exponentially for times close to the critical point (m < 1). This increases the sensitivity of the method described herein. The preferred condition for parameter "$\omega$" avoids, on the one hand, too fast log-periodic oscillations which would otherwise fit the random component of the input data and, on the other hand, too slow log-periodic oscillations which would otherwise contribute to the trend. The remaining fitting parameters "B" and "C1" in equation (1) can be fitted without additional constraints.

In a preferred embodiment of the method described herein, the respective trends for the local maxima ($T_{max}$) and the local minima ($T_{min}$) are each determined in step d) as follows:

In step d1), the N-1 extreme values that are closest to the given data point ($t_n$, $y_n$) for which it is determined in step e) whether or not it corresponds to a critical point ($t_c$) are selected from the local extrema (N) identified in step c).

In step d2), the selected N-1 extreme values are fitted using linear regression to obtain a regression line and the slope of said regression line is determined. The slope determines the trend (T) for the local maxima ($T_{max}$) and the local minima ($T_{min}$), respectively.

The procedure of finding trends, i.e. steps d1) and d2), is carried out separately for maxima and minima, either simultaneously or subsequently.

Due to the large number of parameters necessary to be determined during the fitting procedure of the log-periodic power law function and the presence of many local extrema (N), the whole procedure of obtaining the best fit function of the log-periodic power law function may be difficult and computationally expensive.

For this reason, in a preferred embodiment of the method disclosed herein, the fitting parameters of the log-periodic power law model function $W(t)$ are calculated in step b) for a plurality of subsets of the input time series provided in step a). The fitted function is obtained from the subset ($p_{max}$) of the plurality of subsets which satisfies the conditions $P_{max} \geq L_{min}$, $P_{max} \geq L_{max}$, and $t \leq t_n$, and which gave the overall smallest value for the mean squared error *mse.*

This way, the computing power required to perform the method as well as the time needed for it can be reduced. However, it should be noted that using a small number of past data ($L_{min}$), i.e. data points preceding the given data point ($t_n$, $y_n$) for which it is determined in step e) whether or not it corresponds to a critical point ($t_c$), for the best fit may result in (too) many good fits (with very small fitting error), which may correspond to random correlations of the input data with the form of the fitted function. The upper limit ($L_{max}$) for the number of input time series is due to the fact that the probability of finding a good match becomes increasingly smaller with increasing number of data points.

Therefore, in a further preferred embodiment of the method disclosed herein, the minimum number of preceding data points ($L_{min}$) is 40 and the maximum number of preceding data points ($L_{max}$) is 101. In this embodiment, the best past data length ($p_{max}$) may in particular be in units of days.

If a critical point ($t_c$) has been determined in step e), a preferred embodiment of the method disclosed herein further comprises a step g). In step g), a time period when the predicted failure of said at least one component of the industrial system is expected to occur is output based on the mean squared error *mse* obtained in step b).

The accuracy of determining the critical points ($t_c$) depends on the error of fitting the log-periodic power law model function $W(t)$ to the input data. The smaller the mean squared error *mse*, the higher the reliability that a given point of the input time series is indeed a critical point (or not). Moreover, in the vicinity of critical points, a bunching of points with high goodness of fits, i.e. small mean squared errors *mse*, are observable. Such groupings of points with similar matching errors occur a certain time before the predicted failures are actually identified, e.g. when repair is done on the monitored industrial system. In the case of a reciprocating compressor system, this grouping of points with similar matching errors may occur approximately 40 days before the failure identification time, as will be discussed in more detail below.

Step g) may be performed either simultaneously with or after step f).

For various reasons (economic, production, etc.) not every failure requires corrective actions. Sometimes, a minor failure may not be a good reason to stop the industrial system or a process.

In a preferred embodiment of the method disclosed herein, the output signal further indicates the severity of the detected failure. This way, the profitability of the method is increased as the user can readily decide whether, e.g., further action is required immediately, at a certain point in the future, or if the operation of the system can likely continue without a breakdown.

By comparing the failures detected with the method disclosed herein with the resulting operational behavior of the system and/or the actual occurrence of the detected failures as evaluated by experts of the monitored industrial system, it was found that the matching error, i.e. the mean squared error *mse*, depends on the criticality (severity) of the failure actually identified in the future. Hence, in order to keep the number of detected failures and corresponding output signals (e.g. error messages) within limits and, in particular, to reduce them to truly relevant events, threshold values of the mean squared error *mse* and the corresponding criticality or severity of the predicted failures may be defined.

By way of example, the following classification of predicted failures may be applied, in particular where the industrial system is a reciprocating compressor system:

1. Critical event: *mse* < $6 \cdot 10^{-5}$; severe failure expected, need to check system and prepare for repair.

2. Monitoring event: $6 \cdot 10^{-5} \leq mse < 10 \cdot 10^{-5}$; expected possibility of problems, monitoring of system behavior required.

3. Irrelevant event: $10 \cdot 10^{-5} \leq mse$; not significant predictions, monitoring of system behavior optional.

Accordingly, in a preferred embodiment of the method disclosed herein, the signal is only output in step f) when the mean squared error $mse$ is less than or equal to a predefined threshold. In an even more preferred embodiment of the method disclosed herein, the signal is only output in step f) when the mean squared error $mse$ is less than $10 \cdot 10^{-5}$. In a particularly preferred embodiment of the method disclosed herein, the signal is only output in step f) when the mean squared error $mse$ is less than $6 \cdot 10^{-5}$.

Following the method described herein, a more precise identification of the anticipated problem can be achieved if the input data or the input time series, respectively, relates to a specific part of the monitored industrial system, in particular of the reciprocating compressor.

In a preferred embodiment of the method disclosed herein, the input time series relates to the opening angle of at least one suction valve in a cylinder of a reciprocating compressor. Therein, the opening angle is given as a function of pressure, which is expressed or expressible by the crankshaft rotation angle.

In another preferred embodiment of the above-described method, the reciprocating compressor is a double-acting reciprocating compressor comprising a double-acting cylinder with a crank end and a head end. At least one suction valve is arranged at the crank end and at least one suction valve is arranged at the head end of said double-acting cylinder.

This way, any critical point $t_c$ detected is indicative of a potential future failure in a localized part of the cylinder. For example, in the case of an input time series relating to a suction valve arranged at the crank end of a double-acting cylinder, when the predicted trend of the opening angle of the suction valve is decreasing, there is a possibility of a suction valve failure or piston rod packing damage. If the trends suggest an increase of the angle, the problem is with the discharge valve. Similarly, in the case of an input time series relating to a suction valve arranged at the head end of a double-acting cylinder, if the trends of the opening angle of the suction valve are decreasing, it points towards a malfunction of the suction valve or damage to the cylinder seals. On the other hand, increasing trends of the opening angle indicate a malfunction of the discharge valve.

Thus, based on the method disclosed herein, the algorithm is able to predict both the time period of failure occurrence and the group of parts that may fail.

The object is further achieved with an industrial system comprising at least one component for which a future failure is to be predicted, at least one sensor, a condition monitoring unit, and means for outputting a signal indicating that a failure of said component was predicted. The at least one sensor is configured to provide an input time series comprising a plurality of data points to said condition monitoring unit. Each data point contains a time stamp and a value of a variable $W$ measured at the respective time stamp. The condition monitoring unit is configured to perform the steps of any one of the methods disclosed herein.

The beneficial effects of such an industrial system are essentially the same as those already described for the methods disclosed herein. In particular, such an industrial system is characterized by a high reliability of operational readiness and generally increased service life, since a chain of errors or failures with any consequential damage is also prevented or at least reduced by the predictive maintenance method disclosed herein.

In a preferred embodiment of the industrial system disclosed above, the industrial system is a reciprocating compressor comprising a crankshaft and a cylinder with at least one suction valve. The at least one sensor is configured to measure the opening angle of at least one of said suction valves as a function of pressure, which is expressed or expressible by the crankshaft rotation angle.

In a further preferred embodiment of the reciprocating compressor system disclosed above, the reciprocating compressor is a double-acting reciprocating compressor comprising a double-acting cylinder with a crank end and a head end. At least one suction valve is arranged at the crank end and at least one suction valve is arranged at the head end of said double-acting cylinder.

The object is further solved with a computer program comprising instructions which, when the program is executed by a computer, cause the computer to carry out the steps of a method as disclosed herein.

The object is further achieved with a computer-readable storage medium embodying a computer program comprising instructions which, when executed by a computer, cause the computer to carry out the steps of a method as disclosed herein.

In the context of the present invention, the term "storage medium" encompasses, in particular, cloud storage, flash storage, and embedded storage.

The object is further achieved with the use of a method as disclosed herein for predicting failures in an industrial system. In particular, the industrial system comprises or consists of a reciprocating compressor system.

The invention will be better understood with reference to the following description of preferred embodiments and the accompanying drawings, wherein the same reference numerals are used to denote the same or equivalent features amongst different embodiments and examples:

Fig. 1 Flowchart showing a process sequence of an embodiment of a method disclosed herein;
Fig. 2a Example of a fitted LPPL function with a positive trend for a selected data point;
Fig. 2b Example of a fitted LPPL function with a negative trend for a selected data point;
Fig. 3 Example of the detection of time points that correspond to critical points in an input time series;
Fig. 4 Example of the predicted time periods for failure occurrence for the critical points determined in the example of Fig. 3.

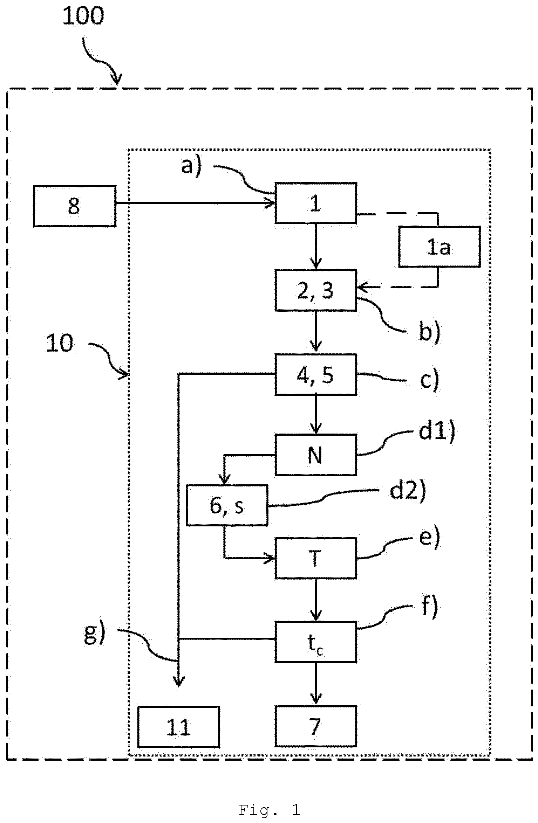

Figure 1 shows the sequence of steps of an embodiment of the method described herein for determining whether or not a given data point ($t_n$, $y_n$) (not separately shown in Figure 1) of a time series of input data 1 is a critical point $t_c$ for said time series. The detection of a critical point $t_c$ is treated as a detection of a future failure of at least one component 8 of an industrial system 100. The algorithm is performed by a condition monitoring unit 10 which is part of the industrial system 100 but may be physically located separately from it. For reasons of clarity, in Figure 1 the respective maxima and minima of the local extrema N, of the regression lines 6 and their slopes s, as well as of the trends T are not designated separately (subscript $_{max}$ or $_{min}$ not shown in Figure 1). However, as is clear from the present specification, the above elements refer to both the respective maxima and minima.

The method comprises the steps a) through f): In step a), an input time series 1 relating to the state of at least one component 8 of the industrial system 100 for which a future failure is to be predicted is provided. The input time series 1 comprises a plurality of data points ($t_{1,...,n}$, $y_{1,...,n}$), wherein each data point contains a time stamp $t_i$ and a value $y_i$ of a variable $W$ measured at the respective time stamp $t_i$. The input time series 1 may optionally be reduced to one or more subsets 1a of data points, each subset consisting of a number L of data points preceding the given data point, i.e. the data point under consideration for which it is determined whether or not it is a critical point. This alternative of using a subset 1a of the input time series 1 is indicated by the dashed arrow in Figure 1. In step b), the best fit 5 of a log-periodic power law model function $W(t)$ 3 is determined by calculating the fitting parameters 2 of said function $W(t)$ 3. The best fit 5 is characterized by the smallest mean squared error $mse$ 4 to the input time series 1 or to the subset of input data 1a, specifically to the subset of time length $p_{max}$ which gave the overall smallest mean squared error $mse$ (not shown). Next, the local extrema N of the fitted function 5 are identified in step c). The local extrema N consist of the local maxima $N_{max}$ and the local minima $N_{min}$ of the fitted function 5. In step d), which in the embodiment shown in Figure 1 comprises steps d1) and d2), the trends T of the identified local extrema N are identified. More specifically, a first trend $T_{max}$ is determined from at least some of the identified local maxima $N_{max}$ and a second trend $T_{min}$ is determined from at least some of the identified local minima $N_{min}$, respectively. In the present example, the trend for the local maxima $T_{max}$ is determined by selecting in step d1), from the local maxima $N_{max}$ identified in step c), the N-1 local maxima closest to the given data point ($t_n$, $y_n$) for which it is determined in step e) whether or not it corresponds to a critical point $t_c$. In step d2), the selected N-1 local maxima are fitted using linear regression to obtain a regression line $6_{max}$ and the slope $s_{max}$ of said regression line $6_{max}$ is determined. The slope $s_{max}$ determines the trend for the local maxima $T_{max}$. The trend for the local minima $T_{min}$ is determined analogously, i.e. from the selected N-1 local minima and the slope $s_{min}$ of the respective regression line $6_{min}$. In step e), it is identified whether or not the given data point ($t_n$, $y_n$) of the input time series 1 is a critical point $t_c$, wherein said given data point ($t_n$, $y_n$) is a critical point $t_c$ if both trends, i.e. the trend $T_{max}$ determined from at least some of the identified local maxima $N_{max}$ and the trend $T_{min}$ determined from at least some of the identified local minima $N_{min}$, have the same character (i.e. both slopes positive or both slopes negative) for the last point ($t_{n-1}$, $y_{n-1}$) of the input data preceding said given data point ($t_n$, $y_n$). If it was determined in step e) that the given data point ($t_n$, $y_n$) under investigation is a critical point $t_c$, a signal 7 is output indicating that a failure of at least one component 8 in the industrial system 100 was predicted.

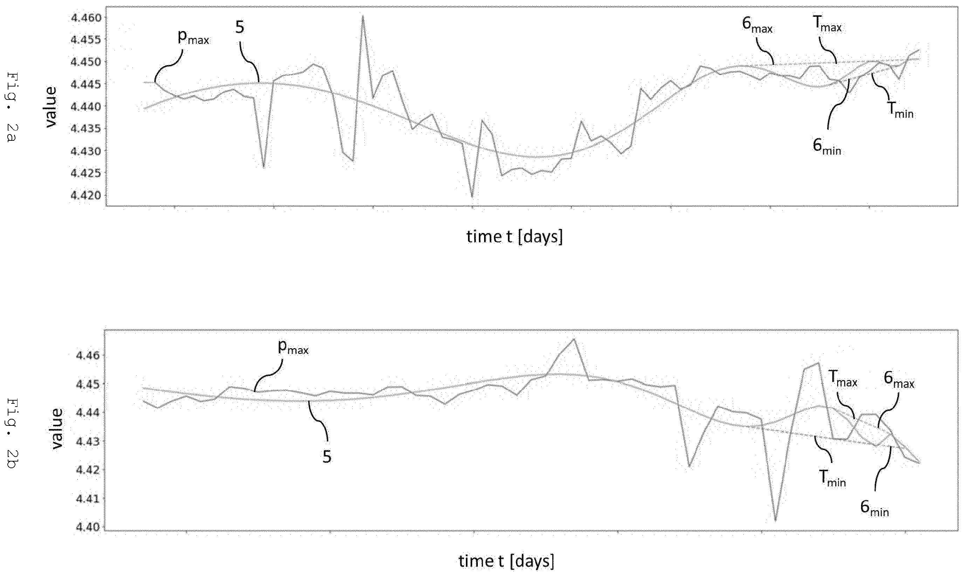

Figures 2a and 2b show examples of a log-periodic power law function 5 fitted to a subset of an input time series with time length $p_{max}$, the subset $p_{max}$ having a positive trend (Figure 2a) and a negative trend (Figure 2b) for the given data point, respectively. As can be seen from the respective Figures 2a and 2b, the given data point ($t_n$, $y_n$) is a critical point $t_c$ as both the determined trend $T_{max}$ and the determined trend $T_{min}$ have the same character, i.e. the slopes of the regression lines $6_{max}$ and $6_{min}$ are positive (Figure 2a) or negative (Figure 2b) for the last point of the input time series preceding the given data point. The examples presented in Figures 2a and 2b stem from a backtest of the prediction method disclosed herein on historical data for a 1-year and a 2-year time period, respectively, for which the critical points were calculated. Starting from a start time $t_{start}$, for each next timestamp of the input time series time series the best fit LPPL function 5 is calculated, which is characterized by the smallest mean squared error $mse$ to the input time series 1. The resulting graphs 5 shown in Figure 2a and Figure 2b show the results over time in units of days.

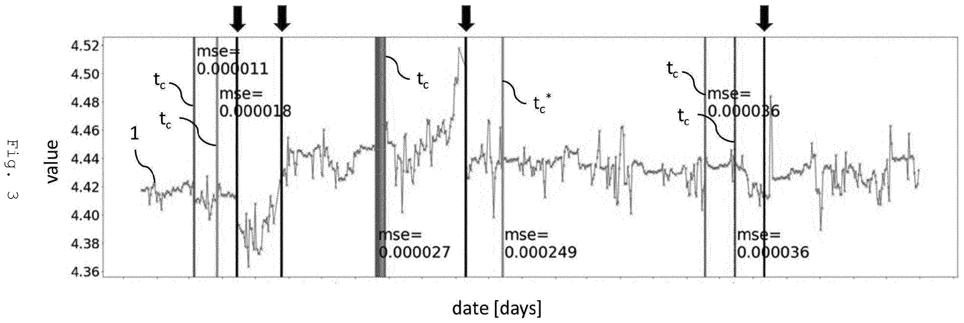

Figure 3 shows an example of predicted future failures that correspond to critical points $t_c$ for a given input time series 1. The input time series in Figure 3 is a solid line with measurement points marked with reference numeral 1. The vertical lines marked with $t_c$ each indicate a critical point $t_c$ determined by the algorithm disclosed herein. For each critical point $t_c$, moving from the left to the right in Figure 3, the mean value of the LPPL function fitting error (mean squared error *mse*) is annotated. The four vertical lines in Figure 3, which are marked with a bold arrow, indicate the dates of compressor repairs (diagnosed breakpoints), which typically occurred a few to several weeks after the failure was predicted by a conditional monitoring systems using the method disclosed herein. Except for the detected critical point marked $t_c$* and the prediction determined by the largest error (*mse* = 0.000249), the correlation of the detected critical points $t_c$ with the diagnosed breakpoints is clearly visible. Put differently, the determined critical point $t_c$* can be classified as an irrelevant event due to its mean squared error *mse* being greater than or equal to the corresponding mse-threshold for irrelevant events of $10 \cdot 10^{-5}$.

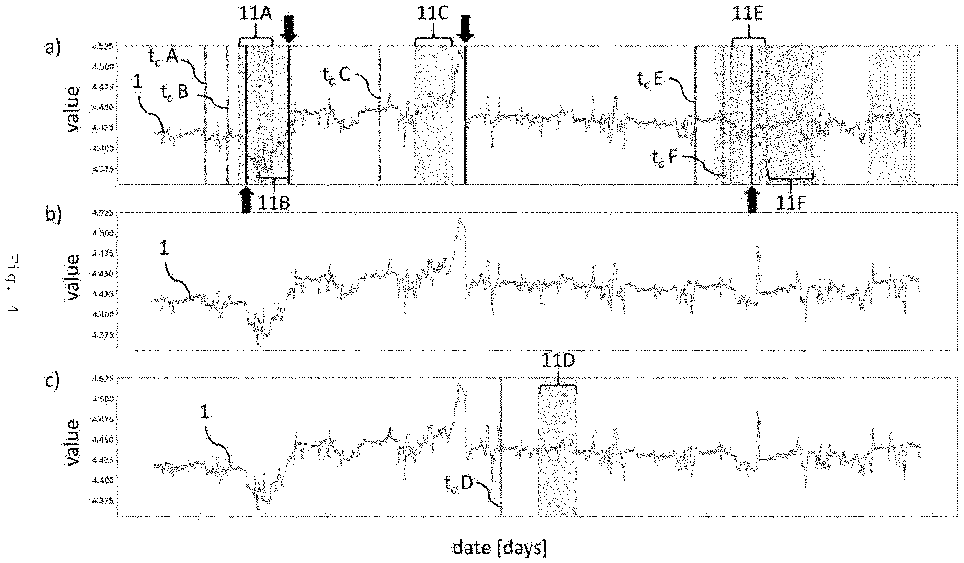

Figure 4 shows the predicted time periods 11 for failure occurrence for the critical points $t_c$ determined in the example of Fig. 3. Each of the three illustrations a), b) and c) of Figure 4 shows the same input time series marked with the reference numeral 1 as well as the critical points $t_c$ determined for said input time series 1, wherein the critical points $t_c$ are additionally labelled, moving forward in time from the left to the right in the respective illustrations, with A to F. For each critical point $t_c$, a corresponding time period 11 (areas bound by vertical dashed lines) indicating when the component monitored is expected to fail is provided. Notably, in Figure 4, the categorization of the criticality of the forecasted failures is represented by the splitting into the three separate illustrations, wherein a) shows the critical points $t_c$ A-C and $t_c$ E-F and the corresponding time periods 11A-C and 11E-F falling into the category of "critical events". In the present example, the "critical events" class is characterized by a mean squared error *mse* of $< 6 \cdot 10^{-5}$. Illustration b) shows the "monitoring event" class, characterized by, in the present example, a mean squared error *mse* of $6 \cdot 10^{-5} \leq mse < 10 \cdot 10^{-5}$. In the present example, the "monitoring event" class remains without any marked vertical lines since the algorithm determined no critical point $t_c$ fulfilling this requirement for the mean squared error *mse.* Lastly, illustration c) shows the "irrelevant event" class, characterized by, in the present example, a mean squared error *mse* equal to or greater than $10 \cdot 10^{-5}$. As can be seen from illustration c) of Figure 4, only one critical point $t_c$D fulfilling this requirement for the mean squared error *mse* was determined by the algorithm, but no actual failure has occurred in the corresponding predicted time period 11D. It follows that no repair of the compressor has taken place. The repair (maintenance) times are indicated in

Figure 4 by black arrows. Moreover, the gray areas in illustration a), which do not bear reference numerals, refer to periods during which qualified personnel observed abnormal compressor behavior that had to be monitored. As can be seen from Figure 4, the correlation between predictions of failure occurrence time periods 11 and actual repair dates as well as periods when compressor anomalous behavior was detected by experts is very good for the "critical event" and "monitoring event" categories. Predictions in the "irrelevant event" category were not followed or confirmed by any repair and diagnosis records, which further demonstrates the effectiveness of the method disclosed herein.

## Claims

1.  A method for predicting failures in an industrial system (100), in particular in a reciprocating compressor (100), the method comprising the steps:

    a) Providing an input time series (1) comprising a plurality of data points ($t_{1,...,n}$, $y_{1,...,n}$), each data point containing a time stamp ($t_i$) and a value ($y_i$) of a variable W measured at the respective time stamp ($t_i$), wherein the index 1 denotes the first value, the index n denotes a given value, and the index i denotes a value lying between said first value and said given value of said input time series (1);
    b) Calculating fitting parameters (2) of a log-periodic power law model function $W(t)$ (3) that give the smallest mean squared error *mse* (4) to the input time series (1) or to at least one subset (1a) of data points of said input time series (1), wherein each subset (1a) consists of a number (L) of data points ($t_{i,...,n-1}$, $y_{i,...,n-1}$) preceding the given data point ($t_n$, $y_n$) of said input time series (1), to obtain a fitted function (5) ;
    c) Identifying the local extrema (N) of the fitted function (5), wherein the local extrema (N) consist of the local maxima ($N_{max}$) and the local minima ($N_{min}$) of the fitted function (5);
    d) Determining a trend ($T_{max}$) from at least some of the identified local maxima ($N_{max}$) and a trend ($T_{min}$) from at least some of the identified local minima ($N_{min}$), respectively;
    e) Identifying whether or not the given data point ($t_n$, $y_n$) is a critical point ($t_c$), wherein said given data point ($t_n$, $y_n$) is treated as a critical point ($t_c$) if both of the trends ($T_{max}$; $T_{min}$) determined in step d) have the same character for the last point ($t_{n-1}$, $y_{n-1}$) of the input time series preceding said given data point ($t_n$, $y_n$) ; and
    f) If a critical point ($t_c$) has been identified in step e), outputting a signal (7) indicating that a future failure of at least one component (8) in the industrial system (100) was predicted.

2.  The method according to claim 1, wherein the log-periodic power law model function $W(t)$ (3) is equation (1):

$$W(t) \approx A + |t_c - t|^m \left[ B + C_1 cos \left( \omega \log |t_c - t| + \Phi \right) \right] \qquad (1)$$

with

W = vector of variables by which the industrial system (100) is analyzed,
$t_c$ = critical point treated as a detection of a future failure event,
$t = [t_{n-1-pmax}, t_{n-pmax}, ..., t_{n-2}, t_{n-1}]$ - the transverse vector of time points has a length of $p_{max}$ in units of time, A, B, m, $C_1$, $\omega$, $\Phi$, $p_{max}$ = fitting parameters (2) .

3. The method according to claim 2, wherein the following constraints are imposed on the following of said fitting parameters (2):

   - A > 0; and/or
   - 0 < m < 1; and/or
   - 2 < $\omega$ < 8;

   preferably, the following constraints are imposed on the following of said fitting parameters (2):

   - A > 0; and
   - 0 < m < 1; and
   - 2 < $\omega$ < 8.

4. The method according to any one of claims 1 to 3, wherein the respective trends for the local maxima ($T_{max}$) and the local minima ($T_{min}$) in step d) are each determined as follows:

   d1) Selecting, from the local extrema (N) identified in step c), the N-1 extreme values that are closest to the given data point ($t_n$, $y_n$) for which it is determined in step e) whether or not it corresponds to a critical point ($t_c$);
   d2) Fitting the selected N-1 extreme values using linear regression to obtain a regression line (6) and determining the slope (s) of said regression line (6), wherein the slope (s) determines the trend (T) for the local maxima ($T_{max}$) and the local minima ($T_{min}$), respectively.

5. The method according to any one of claims 1 to 4, wherein in step b), the fitting parameters (2) of said log-periodic power law model function $W$(t) (3) are calculated for a plurality of subsets (1a), respectively, and wherein the fitted function (5) is obtained from the subset ($p_{max}$) of said plurality of subsets (1a) which gave the overall smallest mean squared error *mse* (4a).

6. The method according to any one of claims 1 to 5, wherein the number (L) of data points is between a minimum number ($L_{min}$) of 40 and a maximum number ($L_{max}$) of 101.

7. The method according to any one of claims 1 to 6, wherein, if a critical point ($t_c$) is determined in step e), the method further comprises the step:
   g) Outputting, based on the mean squared error *mse* (4) obtained in step b), a time period (11) when the predicted failure of said at least one component (8) is expected to occur, wherein step g) is performed either simultaneously with or after step f).

8. The method according to any one of claims 1 to 7, wherein the signal (7) is only output when the mean squared error *mse* (4) is less than or equal to a predefined threshold, in particular when the mean squared error *mse* (4) is less than $10 \cdot 10^{-5}$, preferably less than $6 \cdot 10^{-5}$.

9. The method according to any one of claims 1 to 8, wherein the input time series (1) relates to the change of, in particular is, the opening angle of at least one suction valve in a cylinder of a reciprocating compressor (100) as a function of pressure, wherein the pressure is expressed or expressible by the crankshaft rotation angle.

10. The method according to claim 9, wherein the reciprocating compressor (100) is a double-acting reciprocating compressor comprising a double-acting cylinder with a crank end (CE) and a head end (HE), wherein at least one suction valve is arranged at the crank end (CE) and at least one suction valve is arranged at the head end (HE) of said double-acting cylinder.

11. An industrial system (100) comprising at least one component (8) for which a future failure is to be predicted, at least one sensor (9), a condition monitoring unit (10), and means for outputting a signal (7) indicating that a failure of said component (8) was predicted, wherein said at least one sensor (9) is configured to provide an input time series (1) comprising a plurality of data points ($t_n$, $y_n$) to said condition monitoring unit (10), each data point containing a time stamp ($t_i$) and a value ($y_i$) of a variable $W$ measured at the respective time stamp ($t_i$), and wherein said condition monitoring unit (10) is configured to perform the steps of the method of any one of claims 1 to 10.

12. The industrial system (100) according to claim 11, wherein the industrial system (100) is a reciprocating compressor (100) comprising a crankshaft and a cylinder with at least one suction valve, and wherein the at least one sensor (9) is configured to measure the opening angle of at least one of said suction valves as a function of pressure, wherein the pressure is expressed or expressible by the crankshaft rotation angle.

13. The industrial system (100) according to claim 12, wherein the reciprocating compressor (100) is a double-acting reciprocating compressor comprising a double-acting cylinder with a crank end (CE) and a head end (HE), wherein at least one suction valve is arranged at the crank end (CE) and at least one suction valve is arranged at the head end (HE) of said double-acting cylinder.

14. A computer program comprising instructions which, when the program is executed by a computer, cause the computer to carry out the steps of the method according to any one of claims 1 to 10.

15. A computer-readable storage medium embodying a computer program comprising instructions which, when executed by a computer, cause the computer to carry out the steps of the method according to any one of claims 1 to 10.

16. Use of the method according to any one of claims 1 to 10 for predicting failures in an industrial system (100), in particular in a reciprocating compressor.

Fig. 1

Fig. 2a

Fig. 2b

Fig. 3

Fig. 4

Europäisches
Patentamt

European
Patent Office

Office européen
des brevets

# EUROPEAN SEARCH REPORT

Application Number

EP 22 20 6446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANKAN BANERJEE ET AL: "Imprints of log-periodicity in thermoacoustic systems close to lean blowout", ARXIV.ORG, CORNELL UNIVERSITY LIBRARY, 201 OLIN LIBRARY CORNELL UNIVERSITY ITHACA, NY 14853, 11 May 2022 (2022-05-11), XP091223920, * section III "Experiments" and section IV.D "Log-periodic power fitting" * | 1-16 | INV. G05B23/02 |
| A | US 2010/106458 A1 (LEU MING C [US] ET AL) 29 April 2010 (2010-04-29) * paragraphs [0002], [0046], [0051], [0079] * | 1,11, 14-16 | |

TECHNICAL FIELDS
SEARCHED       (IPC)

G05B

The present search report has been drawn up for all claims

| Place of search | Date of completion of the search | Examiner |
|---|---|---|
| Munich | 25 April 2023 | Messelken, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 6446

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | Publication date | Patent family member(s) | Publication date |
|---|---|---|---|
| US 2010106458 A1 | 29-04-2010 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHANSEN, A. ; SORNETTE, D.** Evaluation of the quantitative prediction of a trend reversal on the Japanese stock market in 1999. *International Journal of Modern Physics C,* 2000, vol. 11 (2), 359-364

- **SORNETTE, D.** Critical market crashes. *Physics Reports,* 2003, vol. 378 (1), 1-98